# EUROPÄISCHE PATENTANMELDUNG

(11) **EP 1 847 719 A2**
(43) Veröffentlichungstag der Anmeldung: **24.10.2007**
(21) Anmeldenummer: 07105427.4
(22) Anmeldetag: 02.04.2007
(51) Int. Cl.: F15B 15/14

(54) **Verfahren zur Bestimmung eines Betätigungsdruckes eines Druckmittelzylinders**

(30) Priorität: 20.04.2006 DE 102006018314
(71) Anmelder: ZF FRIEDRICHSHAFEN AG, 88038 Friedrichshafen (DE)
(72) Erfinder: Petzold, Rainer, 88045 Friedrichshafen (DE); Ingenbleek, Robert, 88079 Kressbronn (DE); Steinborn, Mario, 88046 Friedrichshafen (DE)

(57) **Zusammenfassung**

Die Erfindung beinhaltet ein Verfahren zur Bestimmung eines Betätigungsdruckes eines Betätigungsmittels (1), beispielsweise in einem Kraftfahrzeug, welches in Folge einer Beaufschlagung mit dem Betätigungsdruck einen Stellweg ausgibt. Der Betätigungsdruck des Betätigungsmittels (1) wird ohne Verwendung eines Drucksensors über eine Verformungsmessung ermittelt.

## Beschreibung

Die Erfindung betrifft ein Verfahren zur Bestimmung eines Betätigungsdruckes eines Betätigungsmittels, beispielsweise in einem Kraftfahrzeug, nach der im Oberbegriff von Anspruch 1 näher definierten Art.

Automatisierte Schaltgetriebe bestehen hinsichtlich ihrer Hauptkomponenten aus konventionellen, gegebenenfalls auch manuell betätigbaren Schaltgetrieben, bei denen das Betätigen der Schalt- und/oder Anfahrkupplung zwischen Antriebsmotor und Getriebe sowie das Wählen und Schalten von Getriebegängen über entsprechende Betätigungsmittel automatisiert erfolgt. Diese Betätigungsmittel sind üblicherweise als hydraulisch oder pneumatisch betätigbare Stellzylinder oder als elektrische Aktuatoren ausgebildet, welche auf Stellmittel für die genannten Getriebefunktionen einwirken, Die Stellmittel können am oder im Getriebe angeordnet sein.

Zur Ansteuerung von hydraulischen bzw. pneumatischen Betätigungsmitteln sind Druckerzeugungs- und Steuerungsvorrichtungen notwendig, die gemäß dem Stand der Technik eine Hydraulik- bzw. Pneumatikpumpe als Druckerzeugungsvorrichtung, einen Druckspeicher, eine hydraulische bzw. pneumatische Steuerungseinheit mit Steuerungsventilen und Sensoren umfassen, welche mit einer zentralen Steuerungs- und Regelungsvorrichtung in Verbindung stehen und von dieser nach dort abgespeicherten Steuerungs- und Regelungsfunktionen ansteuerbar sind.

Aus Kostengründen und um die Komplexität einer Stelleinrichtung gering zu halten ist es vielfach nicht erwünscht, einen eigenen Drucksensor zur Ermittlung des Betätigungsdruckes eines Stellzylinders vorzusehen.

In der DE 101 31 853 A1 wird ein Verfahren zur Ermittlung eines Betätigungsdruckes eines druckmittelbetätigbaren Stellzylinders beschrieben. Bei diesem Verfahren wird nur ein Drucksensor zur Ermittlung des Betätigungsdruckes verwendet. Dieser Drucksensor ist zwischen einem Hauptabschaltventil und Schaltventilen zur Ansteuerung des Stellzylinders angeordnet und kann je nach Schaltstellung der Ventile der Stelleinrichtung verschiedene Drücke sensieren, beispielsweise den Zuflussdruck von der Druckversorgung oder einen dem Betätigungsdruck des Stellzylinders vergleichbaren Druck. Durch die Beaufschlagung des Stellzylinders mit einem Betätigungsdruck gibt dieser einen Stellweg aus. Der Stellweg kann dabei aus einem vorhandenen Signal gewonnen werden, beispielsweise aus dem Signal eines im Stellzylinder integrierten oder extern angebrachten Wegsensors. Der Betätigungsdruck des Stellzylinders wird unter Verwendung der durch den Betätigungsdruck bewirkten Änderung des Stellweges rechnerisch aus dem vom Drucksensor erfassten Zuflussdruck ermittelt. Durch dieses Verfahren wird im Vergleich zu anderen bekannten Verfahren, welche ebenfalls nur einen Drucksensor aufweisen, eine höhere Genauigkeit zur Ermittlung des Betätigungsdruckes und somit der Stellkraft eines druckmittelbetätigbaren Stellzylinders erreicht.

Der vorliegenden Erfindung liegt die Aufgabe zugrunde, ein Verfahren zur Bestimmung eines Betätigungsdruckes eines Betätigungsmittels darzustellen, bei welchem der Betätigungsdruck ohne Verwendung eines Drucksensors ermittelt wird,

Die der Erfindung zugrunde liegende Aufgabe wird durch ein, auch die kennzeichnenden Merkmale des Hauptanspruchs aufweisendes, gattungsgemäßes Verfahren zur Bestimmung eines Betätigungsdruckes eines Betätigungsmittels gelöst.

In Kraftfahrzeugen werden beispielsweise das Wählen und Schalten von Getriebegängen sowie das Betätigen der Schalt- und/oder Anfahrkupplung zwischen Antriebsmotor und Getriebe über Betätigungsmittel realisiert. Solche Betätigungsmittel können beispielsweise als druckmittelbeaufschlagbare Stellzylinder ausgebildet sein. Werden die Druckräume solcher Stellzylinder mit einem Druckmittel beaufschlagt, so entstehen in diesen Druckräumen entsprechende Schaltkräfte. Durch diese Schaltkräfte wird ein Kolben des Stellzylinders in eine entsprechende Richtung bewegt. Durch die Bewegung des Kolbens kann eine Kraft auf ein Stellmittel ausgeübt werden, welches mit dem Stellzylinder in Verbindung steht. Solche Stellmittel können beispielsweise als Schaltschienen ausgeführt sein, welche über Schaltgabeln mit Schaltmuffen in Verbindung stehen. Durch axiales Bewegen der Schaltschienen und somit der Schaltmuffen durch den Stellzylinder wird eine Schaltung einer Übersetzungsstufe in einem Getriebe realisiert. Hierbei wird beispielsweise ein Stirnrad über klauenartige Kurzverzahnungen, welche seitlich am Stirnrad angeordnet sind, durch die Schaltmuffe drehfest mit einer Getriebewelle verbunden.

Bei dem erfindungsgemäßen Verfahren wird der Betätigungsdruck eines Stellzylinders über eine Verformungsmessung bestimmt. Sind die Reaktionen der Schaltkraft des Stellzylinders auf andere Elemente bekannt, beispielsweise Durchbiegungen bzw. Verformungen von Stellmitteln, Federelementen oder Anschlägen, so kann aus deren Verhalten durch Messung des Verhaltens auf den Druck im Zylinderraum geschlossen werden. Hierfür wird der durch den Betätigungsdruck des Stellzylinders zurückgelegte Stellweg des Stellzylinders erfasst. Der Stellweg kann dabei aus einem bereits vorhandenen Signal gewonnen werden, beispielsweise aus dem Signal eines im Stellzylinder integrierten oder extern angebrachten Wegsensors.

Bei einem Schaltvorgang in einem Getriebe werden durch die Schaltkraft des Stellzylinders die am Stellzylinder angeordneten Stellmittel verformt, beispielsweise Schaltschienen oder Schaltgabeln. Da eine Wegänderung eines Stellzylinders sehr genau sensiert werden kann, kann auch die Verformung der Stellmittel sehr genau bestimmt werden. Der tatsächliche Zylinderweg bei einem Schaltvorgang setzt sich aus dem nominalen Zylinderweg und dem Weg der Durchbiegung der Stellmittel zusammen. Der nominale Zylinderweg ist der Weg, den der Stellzylinder zurücklegt, um eine Schaltung einer Übersetzungsstufe sicher zu gewährleisten, wobei die Stellmittel nicht verformt werden. Der nominale Zylinderweg für die Schaltung einer Übersetzungsstufe ist eine bekannte Größe, welche beispielsweise in einer Steuerungs- und Regelungseinheit gespeichert ist. Der Weg der Durchbiegung ist umso größer, je größer die Schaltkraft des Stellzylinders ist. Durch eine Ermittlung der Wegdifferenz zwischen dem nominalen und dem durch den Steuerdruck erzeugten Stellweg (Verformungsmessung) kann auf die Schaltkraft in den Druckräumen des Stellzylinders und somit auf den Betätigungsdruck in den Druckmittelleitungen geschlossen werden. Der Weg der Durchbiegung ergibt sich aus dem gesamt zurückgelegten Zylinderweg abzüglich des nominalen Zylinderweges. Der bekannte nominale Zylinderweg wird über die Steuerungs- und Regelungseinheit mit dem tatsächlich zurückgelegten Zylinderweg verrechnet. Besteht keine Wegdifferenz zwischen dem nominalen und dem tatsächlichen Stellweg des Betätigungsmittels, so entspricht dies einem definierten Druckwert bzw. einer entsprechenden Schaltkraft des Betätigungsmittels, welcher/welche beispielsweise in der Steuerungs- und Regelungseinheit gespeichert ist. Falls der tatsächlich zurückgelegte Zylinderweg größer ist als der nominale Zylinderweg, so kann aus dieser Differenz die Verformung der Stellmittel bestimmt werden. Aus dieser Wegdifferenz wird der Betätigungsdruck und somit die Schaltkraft des Stellzylinders ermittelt, Ist der tatsächlich zurückgelegte Zylinderweg kleiner als der nominale Zylinderweg, dann wird durch eine entsprechende Ansteuerung einer Druckregelungsvorrichtung der Druck im Druckraum des Zylinders erhöht, wodurch eine Schaltung einer Übersetzungsstufe sicher gewährleistet wird.

Außerdem ist es denkbar, die Verformung der Stellmittel über Dehnungsmessstreifen zu erfassen. Wird ein Dehnungsmessstreifen aufgrund einer Verformung eines Stellmittels verformt, so ändert sich sein elektrischer Widerstand. Über das Signal der Widerstandsänderung kann der Betätigungsdruck des Stellzylinders ermittelt werden.

Weiterhin ist es möglich, im Stellzylinder elastische Anschläge anzubringen. Diese sind so auszuprägen, dass sie sich in Abhängigkeit der Kolbenkraft unterschiedlich stark verformen. Durch das Messen des Zylinderweges wird die Verformung solcher Anschläge sensiert, wodurch auf den Zylinderinnendruck geschlossen werden kann. Hierfür muss die Steifigkeit der Anschläge bekannt sein. Vom gemessenen Zylinderweg wird dabei der nominale Weg des Stellzylinders abgezogen. Durch die entstehende Wegdifferenz kann auf die Verformung der Anschläge und somit auf den Zylinderinnendruck geschlossen werden.

Bei einer weiteren Ausführungsform können zwischen dem Zylinderkolben und den Endanschlägen des Stellzylinders Federelemente angeordnet werden. Ebenso ist es denkbar, dass die Federelemente zwischen der Kolbenstange des Zylinders und außerhalb des Zylinders vorhandenen Anschlägen angeordnet sind. Durch das Messen deren Einfederung kann ebenfalls auf den Zylinderinnendruck geschlossen werden. Der Federweg ist dabei proportional zum Druck bzw, zur Kraft, welcher/welche auf den Zylinderkolben wirkt. Um den Druck im Stellzylinder über Federelemente zu bestimmen muss die Steifigkeit der Federelemente bekannt sein. Je größer die Steifigkeit des Federelementes, desto kleiner ist die Einfederung. Der nominale Stellweg ist hierbei der Weg, den der Zylinderkolben zurücklegt, bevor das Federelement verformt wird. Bei einem größeren Betätigungsdruck wird das Federelement durch den Zylinderkolben zusammengedrückt. Über diese Verformung des Federelements wird der Betätigungsdruck des Stellzylinders ermittelt.

Wird der Betätigungsdruck des Stellzylinders über die Verformung von beispielsweise Anschlägen oder Federelementen ermittelt, so setzt sich der tatsächliche Zylinderweg aus dem nominalen Zylinderweg, dem Weg durch die Verformung eines Anschlages oder eines Federelements und gegebenenfalls aus der Verformung eines Stellmittels, beispielsweise einer Schaltschiene und/oder einer Schaltgabel, zusammen.

Beim Auftreffen bewegter Elemente auf beispielsweise Anschläge oder Synchronisierungen, kommt es durch dynamische Kräfte zu Überschwingern. Durch eine Messung des Überschwingens und einen Vergleich mit der statischen Verformung kann die dynamische Kraft und somit der Betätigungsdruck des Stellzylinders bestimmt werden. Die Stärke des Überschwingens kann ebenfalls über eine Wegmessung erfasst werden.

Überschreitet der Betätigungsdruck des Stellzylinders ein Maximum und/oder unterschreitet dieser ein Minimum, so kann die Ansteuerung bzw. Regelung des Stellzylinders über beispielsweise eine Steuerungs- und Regelungseinheit entsprechend verändert werden. Wird zum Beispiel der nominale Weg des Stellzylinders nicht erreicht, so wird der Druck im entsprechenden Druckraum des Stellzylinders über beispielsweise eine Druckregelungsvorrichtung entsprechend erhöht, um einen Schaltvorgang sicher zu gewährleisten.

Wird der Betätigungsdruck an mehreren Stellzylindern im gleichen Druckbereich ermittelt, so können die Stellzylinder gegeneinander plausibilisiert, diagnostiziert und/oder kalibriert werden. Erfolgt die Ermittlung des Betätigungsdruckes in mindestens einem Stellzylinder einer Betätigungseinheit mit mehreren Stellzylindern, so kann das Signal zur Druckregelung der Betätigungseinheit durch beispielsweise mindestens ein Hauptabschaltventil verwendet werden.

Erfolgt eine Messung der Verformung an mehreren Stellzylindern, die miteinander verbunden sind und deren Druck annähernd gleich ist, und die Verformungsmessungen ergeben unterschiedliche Werte, so kann darauf geschlossen werden, dass äußere Kräfte auf die Zylinder einwirken. Ist bekannt, auf welche Zylinder äußere Kräfte einwirken, so können diese durch Vergleiche bestimmt werden.

Durch das Öffnen aller dafür notwendigen Ventile einer Betätigungseinheit vom Stellzylinder zu einer Druckmittelversorgung, kann der Druck der Druckmittelversorgung bestimmt werden. Ist der Druck unter einem Minimum bzw. überschreitet der Druck ein Maximum, dann können Warnungen ausgegeben und/oder Schaltungen verhindert werden. Weiterhin kann in Abhängigkeit vom Schaltdruck die Betätigung der Stellzylinder in deren Ansteuer- und Regelverhalten verändert werden, beispielsweise durch eine Steuerungs- und Regelungseinheit.

Wird bei einem Stellzylinder, der nicht angesteuert ist trotzdem eine Verformung eines Stellmittels, eines Anschlages oder eines Federelementes gemessen, so muss eine nicht gewollte Befüllung des Stellzylinders vorliegen, oder eine äußere Kraft auf die Stellmittel einwirken. Diese Verformung kann zu Diagnosezwecken erfasst werden, beispielsweise zur Ventildiagnose. Hierdurch kann beispielsweise eine Leckage eines Schaltventils festgestellt werden.

Durch das erfindungsgemäße Verfahren kann durch das Vorhandensein einer Verformung eines Elementes, beispielsweise einer Schaltschiene, einer Schaltgabel, eines Anschlages und/oder eines Federelementes, durch eine Schaltkraft eines Betätigungsmittels über eine Messung der Verformung des Elementes der Betätigungsdruck des Betätigungsmittels bestimmt werden. Durch das Wegsignal des Betätigungsmittels, beispielsweise eines Stellzylinders, wird die Verformung des Elements ermittelt, welche für eine Druckregelung, eine Kraftregelung und/oder eine Messung des Versorgungsdruckes verwendet werden kann. Somit kann bei der Druckregelungsvorrichtung auf einen Drucksensor verzichtet werden. Auf diese Weise lassen sich Bauteilkosten einsparen und der Bauraum der Druckregelungsvorrichtung verringert sich.

Im Folgenden wird das Grundprinzip der Erfindung, welche mehrere Ausführungsformen zulässt, an Hand einer Zeichnung beispielhaft näher erläutert.

Es zeigen:
- Fig. 1: ein Ausführungsbeispiel zur Bestimmung eines Betätigungsdruckes eines Betätigungsmittels durch Verformung einer Schaltgabel,
- Fig. 2: ein Ausführungsbeispiel zur Bestimmung eines Betätigungsdruckes eines Betätigungsmittels durch Verformung von Federelementen im Betätigungsmittel.

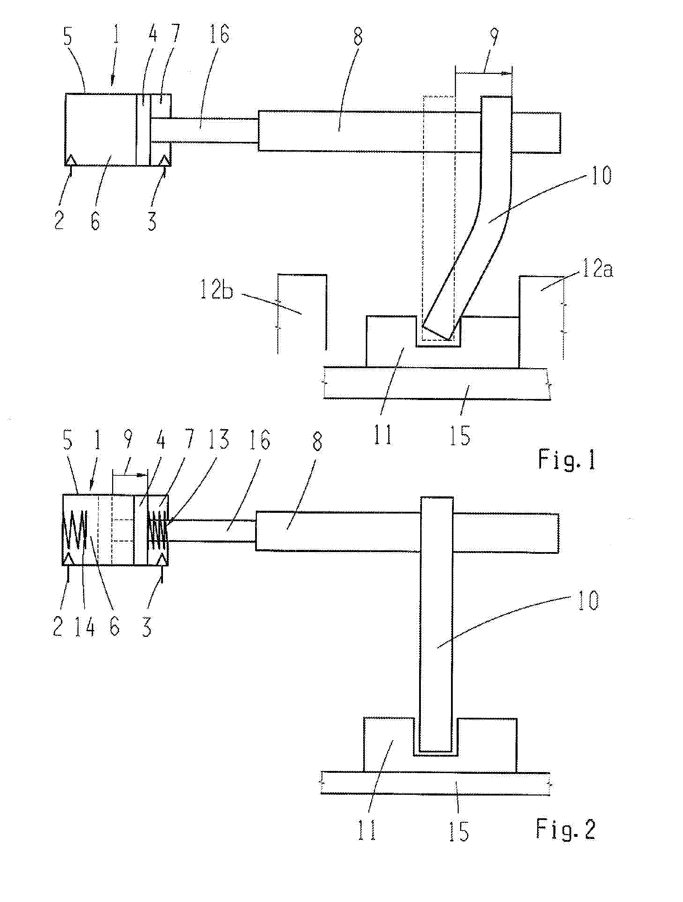

Die Fig. 1 zeigt ein Ausführungsbeispiel zur Bestimmung eines Schaltdruckes in einem Betätigungsmittel 1, beispielsweise in einem Stellzylinder. Druckmittelleitungen 2, 3 sind mit Druckräumen 6, 7 des Stellzylinders 1 verbunden. Der Stellzylinder 1 weist einen Zylinder 5, einen Kolben 4 und eine Kolbenstange 16 auf. Die Kolbenstange 16 steht mit einer Schaltschiene 8 in Verbindung, an welcher eine Schaltgabel 10 angeordnet ist. Die Schaltgabel 10 greift in eine Schaltmuffe 11 ein, welche axial verschiebbar auf einer Welle 15 angeordnet ist, beispielsweise einer Getriebewelle. Durch ein entsprechendes Ansteuern einer Druckregelungsvorrichtung (hier nicht gezeigt) wird ein entsprechender Steuerdruck in der Druckmittelleitung 2 angelegt, wodurch eine entsprechende Schaltkraft im Druckraum 6 des Stellzylinders 1 entsteht. Durch diesen Steuerdruck bzw, die Schaltkraft im Druckraum 6 des Stellzylinders 1 wird der Kolben 4 im Zylinder 5 und die am Kolben 4 angeordnete Kolbenstange 16 in der Zeichenblattebene nach rechts bewegt. Der Kolben 4 und die Kolbenstange 16 können ebenso aus einem Stück gefertigt sein. Durch die Bewegung des Kolbens 4 und somit der Kolbenstange 16 in der Zeichenblattebene nach rechts werden die Schaltschiene 8, die Schaltgabel 10 und die Schaltmuffe 11 ebenfalls nach rechts bewegt. Der Kolben 4 wird dabei solange bewegt, bis die Schaltmuffe 11 an einem Anschlag 12a anschlägt, beispielsweise einer Schaltverzahnung. Dieser zurückgelegte Weg entspricht dem nominalen Weg des Stellzylinders 1. Ist der Betätigungsdruck im Druckraum 6 des Stellzylinders 1 größer als er für den nominalen Weg benötigt wird, so wird die Schaltschiene 8 weiter nach rechts bewegt, wodurch es zu einer Verformung der Schaltgabel 10 kommt. Wird von dem gesamt zurückgelegten Weg des Kolbens 4 der nominale Weg abgezogen, so erhält man eine Wegdifferenz 9, welche durch die Verformung der Schaltgabel 10 entsteht. Über diese Wegdifferenz 9 wird beispielsweise in einer Steuerungs- und Regelungseinheit der Betätigungsdruck im Druckraum 6 des Stellzylinders 1 berechnet, welcher über entsprechende Steuerungs- und Regelungsfunktionen beeinflusst werden kann.

Eine Betätigung der Schaltmuffe 11 in der Zeichenblattebene nach links geschieht in entsprechend umgekehrter Weise. Hierbei wird der Druckraum 7 über die Druckmittelleitung 3 mit einem Betätigungsdruck versorgt, welcher den Kolben 4 im Zylinder 5 nach links bewegt. Der Kolben 4 wird dabei solange bewegt, bis die Schaltmuffe 11 an einem Anschlag 12b anschlägt, beispielsweise einer Schaltverzahnung.

Die Fig. 2 zeigt ein weiteres Ausführungsbeispiel zur Bestimmung eines Schaltdruckes in einem Betätigungsmittel 1, beispielsweise in einem Stellzylinder. Im Unterschied zur Fig. 1 wird der Betätigungsdruck des Stellzylinders 1 nicht über eine Verformung der Schaltgabel 10 sondern über eine Verformung eines Federelementes 13, 14 ermittelt Hierzu sind zwischen dem Kolben 4 und den Endanschlägen des Stellzylinders 1 Federelemente 13, 14 angeordnet. Durch ein entsprechendes Ansteuern einer Druckregelungsvorrichtung (hier nicht gezeigt) wird ein entsprechender Steuerdruck in der Druckmittelleitung 2 und somit im Druckraum 6 des Stellzylinders 1 angelegt. Durch diesen Steuerdruck bzw. die Schaltkraft im Druckraum 6 des Stellzylinders 1 wird ein Kolben 4 im Zylinder 5 und eine am Kolben 4 angeordnete Kolbenstange 16 in der Zeichenblattebene nach rechts bewegt. Die Kolbenstange 16 steht mit der Schaltschiene 8 in Verbindung. Durch die Bewegung des Kolbens 4 und somit der Kolbenstange 16 in der Zeichenblattebene nach rechts werden die Schaltschiene 8, die Schaltgabel1 10 und die Schaltmuffe 11, welche axial verschiebbar auf einer Welle 15 angeordnet ist, ebenfalls nach rechts bewegt. Der Kolben 4 wird dabei solange bewegt, bis er an dem Federelement 13 anschlägt. Dieser zurückgelegte Weg entspricht dem nominalen Weg des Stellzylinders 1. Ist der Betätigungsdruck im Druckraum 6 des Stellzylinders 1 größer als er für den nominalen Weg benötigt wird, so wird die Schaltschiene 8 weiterhin nach rechts bewegt, wodurch es zu einer Verformung des Federelementes 13 kommt. Wird von dem gesamt zurückgelegten Weg des Kolbens 4 der nominale Weg abgezogen, so erhält man eine Wegdifferenz 9, weiche durch die Verformung des Federelementes 13 entsteht. Über diese Wegdifferenz 9 wird beispielsweise in einer Steuerungs- und Regelungseinheit der Betätigungsdruck im Druckraum 6 des Stellzylinders 1 ermittelt, welcher über entsprechende Steuerungs- und Regelungsfunktionen beeinflusst werden kann.

Eine Betätigung der Schaltmuffe 11 in der Zeichenblattebene nach links geschieht in entsprechend umgekehrter Weise. Hierbei wird der Druckraum 7 über die Druckmittelleitung 3 mit einem Betätigungsdruck versorgt, welcher den Kolben 4 im Zylinder 5 nach links bewegt. Ist der Betätigungsdruck im Druckraum 7 des Stellzylinders 1 größer als er für den nominalen Weg benötigt wird, so wird die Schaltschiene 8 weiterhin nach links bewegt, wodurch es zu einer Verformung des Federelementes 14 kommt.

### Bezugszeichen

- 1: Betätigungsmittel, Stellzylinder
- 2: Druckmittelleitung für das Betätigungsmittel
- 3: Druckmittelleitung für das Betätigungsmittel
- 4: Kolben
- 5: Zylinder
- 6: Druckraum
- 7: Druckraum
- 8: Schaltschiene
- 9: Wegdifferenz durch Verformung
- 10: Schaltgabel
- 11: Schaltmuffe
- 12a: Anschlag
- 12b: Anschlag
- 13: Federelement
- 14: Federelement
- 15: Welle
- 16: Kolbenstange

## Patentansprüche

1. Verfahren zur Ermittlung eines Betätigungsdruckes eines Betätigungsmittels (1), beispielsweise eines Kraftfahrzeuges, welches in Folge einer Beaufschlagung mit dem Betätigungsdruck einen Stellweg ausgibt, **dadurch gekennzeichnet, dass** der Betätigungsdruck des Betätigungsmittels (1) über eine Wegdifferenz (9) ermittelt wird, weiche sich aus einem nominalen Stellweg und einem durch den Betätigungsdruck tatsächlich bewirkten Stellweg des Betätigungsmittels (1) ergibt.

2. Verfahren nach Anspruch 1, **dadurch gekennzeichnet , dass** die Wegdifferenz (9) durch eine in Abhängigkeit des Betätigungsdruckes bewirkte Verformung von Stellmitteln, beispielsweise einer Schaltschiene (8) und/oder einer Schaltgabel (10) entsteht.

3. Verfahren nach Anspruch 1, **dadurch gekennzeichnet , dass** die Wegdifferenz (9) durch eine Verformung von Anschlägen entsteht, welche sich in Abhängigkeit der Schaltkraft des Betätigungsmittels (1) unterschiedlich stark verformen,

4. Verfahren nach Anspruch 1, **dadurch gekennzeichnet, dass** die Wegdifferenz (9) durch eine Verformung von Federelementen (13, 14) entsteht, welche sich in Abhängigkeit der Schaltkraft des Betätigungsmittels (1) unterschiedlich stark verformen.

5. Verfahren nach einem der vorangegangenen Ansprüche, **dadurch gekennzeichnet, dass** durch das Auftreffen des Betätigungsmittels (1) auf vorhandene Vorrichtungen, beispielsweise Anschläge oder Synchronisierungen, Überschwinger entstehen, wodurch eine dynamische Kraft bzw. der Betätigungsdruck des Betätigungsmittels (1) bestimmt wird.

6. Verfahren nach einem der vorangegangenen Ansprüche, **dadurch gekennzeichnet, dass** die Änderung des Stellweges des Betätigungsmittels (1) mittels eines am Betätigungsmittel (1) intern oder extern angeordneten Wegsensors erfasst wird.

7. Verfahren nach einem der vorangegangenen Ansprüche, **dadurch gekennzeichnet , dass** der ermittelte Betätigungsdruck im Druckraum des Betätigungsmittels (1) zur Steuerung/Regelung der Stellkraft des Betätigungsmittels (1), insbesondere zur Schaltkraftsteuerung/-regelung für eine hydraulische oder pneumatische Getriebesteuerung verwendet wird.

8. Verfahren nach einem der vorangegangenen Ansprüche, **dadurch gekennzeichnet , dass** der Druck im Druckraum des Betätigungsmittels (1) erhöht wird, falls der nominale Stellweg des Betätigungsmittels (1) nicht erreicht wird.

9. Verfahren nach einem der vorangegangenen Ansprüche, **dadurch gekennzeichnet , dass** beim Überschreiten eines maximalen bzw. beim Unterschreiten eines minimalen Betätigungsdruckes Warnmeldungen ausgegeben und/oder Schaltungen verhindert werden.

10. Verfahren nach einem der vorangegangenen Ansprüche, **dadurch gekennzeichnet, dass** die Verformung eines Stellmittels, Anschlags oder Federelements für Diagnosezwecke verwendet wird.

11. Vorrichtung zur Bestimmung eines Betätigungsdruckes eines Betätigungsmittels (1), bestehend aus dem Betätigungsmittel (1), einem Stellmittel und einer Einrichtung zur Wegerfassung des Betätigungsmittels (1), wobei das Betätigungsmittel (1) in Folge einer Beaufschlagung mit dem Betätigungsdruck einen Stellweg ausgibt, **dadurch gekennzeichnet , dass** der Betätigungsdruck des Betätigungsmittels (1) über eine Wegdifferenz (9) ermittelt wird,

12. Vorrichtung nach Anspruch 11, **dadurch gekennzeichnet, dass** das Betätigungsmittel (1) als Stellzylinder ausgebildet ist.

13. Vorrichtung nach Anspruch 12, **dadurch gekennzeichnet , dass** das Betätigungsmittel (1) als Aktuator eines Kraftfahrzeuggetriebes ausgebildet ist.

14. Vorrichtung nach Anspruch 13, **dadurch gekennzeichnet, dass** das Betätigungsmittel (1) als Stellvorrichtung für eine Schalt- und/oder Anfahrkupplung zwischen Antriebsmotor und Getriebe, eine Getriebebremse oder eine Getriebeschaltwelle ausgebildet ist.

15. Vorrichtung nach Anspruch 11 bis 14, **dadurch gekennzeichnet, dass** das Betätigungsmittel (1) durch ein pneumatisch oder hydraulisch wirkendes Druckmedium betätigbar ist.

16. Vorrichtung nach Anspruch 11, **dadurch gekennzeichnet , dass** die Einrichtung zur Wegerfassung des Betätigungsmittels (1) als ein am Betätigungsmittel (1) intern oder extern angeordneter Wegsensor ausgebildet ist.

17. Vorrichtung nach Anspruch 11 bis 16, **dadurch gekennzeichnet, dass** im Betätigungsmittel (1) und/oder außerhalb des Betätigungsmittels (1) Anschläge angebracht sind, welche sich in Abhängigkeit der Schaltkraft des Betätigungsmittels (1) unterschiedlich stark verformen.

18. Vorrichtung nach Anspruch 11 bis 16, **dadurch gekennzeichnet, dass** zwischen dem Kolben (4) und den Endanschlägen des Betätigungsmittels (1) Federelemente (13, 14) angeordnet sind, welche sich in Abhängigkeit der Schaltkraft des Betätigungsmittels (1) unterschiedlich stark verformen.

19. Vorrichtung nach Anspruch 11 bis 16, **dadurch gekennzeichnet, dass** zwischen der Kolbenstange (16) des Betätigungsmittels (1) und außerhalb des Betätigungsmittels (1) vorhandenen Anschlägen Federelemente (13, 14) angeordnet sind, welche sich in Abhängigkeit der Schaltkraft des Betätigungsmittels (1) unterschiedlich stark verformen.
